# EUROPEAN PATENT SPECIFICATION

(11) **EP 3 960 982 B1**
(45) Date of publication and mention of the grant of the patent: **24.09.2025**
(21) Application number: 21192118.4
(22) Date of filing: 19.08.2021
(51) Int. Cl.: E21B 23/00, E21B 23/14

(54) **MOBILITY PLATFORM FOR EFFICIENT DOWNHOLE NAVIGATION OF ROBOTIC DEVICE**
MOBILITÄTSPLATTFORM ZUR EFFIZIENTEN BOHRLOCHNAVIGATION EINER ROBOTERVORRICHTUNG
PLATE-FORME DE MOBILITÉ POUR NAVIGATION EFFICACE EN FOND DE TROU D'UN DISPOSITIF ROBOT

(30) Priority: 28.08.2020 US 202017006232
(43) Date of publication of application: 02.03.2022
(73) Proprietor: Saudi Arabian Oil Company, Dhahran 31311 (SA)
(72) Inventor: SAEED, Abubaker, Dhahran (SA); SADICK, Shazad, New York (US); SHASHO, Jeffrey, New York (US); BOHREN, Jonathan, New York (US); KHAN, Narmeen, New York (US); PIVO, Elijah, New York (US); MUSCO, Anthony, New York (US); AHIYYA, Lonnell, New York (US)
(74) Representative: Mewburn Ellis LLP

(56) References cited:
- WO-A1-2005/068773
- WO-A1-2019/119083
- WO-A2-98/12418
- CN-B- 108 999 582

## Description

### FIELD OF THE DISCLOSURE

The present disclosure relates generally to geological drilling and downhole procedures, and, more particularly, to a modular mobility platform configured to travel through diverse downhole environments, and to a system and method using such a modular mobility platform.

### BACKGROUND OF THE DISCLOSURE

During procedures in geological environments, such as a downhole of a well or pipe, it is advantageous to explore the environment and to inspect the walls of the well using robots or mobility platforms having electronic-based instruments. However, travel of a robot through a downhole longitudinally, such downhole environments, has presented challenges to known robots, since the lateral width within such environments can various substantially. Accordingly, the sides of the robot can brush against or collide with the walls, potentially damaging the robot and its instruments.

WO 2005/068773 A1 discloses a downhole tractor having a measuring unit at a distal end of the tractor, at least one drive module having treads, and a main controller. A well size and a borehole diameter are measured and sent to the main controller.

WO 2019/119083 A1 discloses a robot autonomous unit (RAU) having at least one power driven traction unit with caterpillar tracks, a processing and control unit in charge of data processing and controlling the robotic system including well diameter sensors and enabling the RAU in an autonomous way, and a well diameter reconnaissance system made up by a set of sensors which enables the identification of a well diameter variation.

CN 108999582 B discloses a well obstacle-crossing tractor having a detection centralizer, a first traction mechanism, a second traction mechanism, and a control mechanism.

Many robots in the prior art also have a fixed structure, such as a housing for retaining a fixed set of motors for travel, as well as a fixed set of instruments for monitoring and inspecting the downhole environment. However, once such robots are constructed, the robot cannot be modified without disassembling the robot, if possible. Therefore, a robot in the prior art is limited to its motors and instruments included during construction.

There are other limitations of known robots that have been used in downhole environments. It is to these constraints that the present disclosure is directed.

### SUMMARY OF THE DISCLOSURE

Aspects of the invention are set forth in the appended claims. According to an embodiment consistent with the present disclosure, a modular mobility platform has extendable and retractable tractor treads for engaging the walls of a downhole environment. Such tractor treads allow the platform to successfully navigate longitudinally through the downhole environment. Moreover, the platform can be composed of a plurality of different modules removably interconnected together longitudinally. Each module can have a specific function, such as sensing, navigation, mobility, control, communication, and power. The platform can have generally longitudinally-directed detectors for detecting the forward or reverse direction through which the platform is to travel. The present disclosure also includes a system and method using such a modular mobility platform.

In an embodiment, a mobility platform is capable of traveling in a downhole environment. The mobility platform includes a sensor module, which is configured to detect a feature of the downhole environment. The mobility platform also includes a computing module configured to determine a first width of an upcoming portion of the downhole environment from the feature. The mobility platform further includes a drive module having extendable and retractable tractor treads. The computing module is further configured to control the drive module to extend or retract the tractor treads to a second width less than a first width to fit the mobility platform in the upcoming portion. The computing module also controls the drive module to drive the tractor treads to move the mobility platform in the upcoming portion. The sensor module, computing module, and drive module can be interconnected. Furthermore, the sensor module, computing module, and drive module can be removably interconnected. Each of the sensor module, computing module, and drive module have housings that are substantially cylindrical with a respective module longitudinal axis. The sensor module, computing module, and drive module are interconnected with the respective longitudinal axes substantially aligned to form the mobility platform and to define a substantially cylindrical shape along a mobility platform longitudinal axis. The tractor treads are extended or retracted laterally relative to the mobility platform longitudinal axis. The sensor module includes a sensor emitting a detection signal in a forward direction at an acute angle to the mobility platform longitudinal axis for detecting the feature. The computing module controls the drive module using wireless signals.

In another embodiment, a system comprises a control apparatus having a controller for a user to enter a command, and a mobility platform capable of traveling in an downhole environment. The mobility platform includes a sensor module configured to detect a feature of the downhole environment. The mobility platform also includes a computing module configured to receive the command and to determine a first width of an upcoming portion of the downhole environment from the feature. The mobility platform further includes a drive module having extendable and retractable tractor treads. The computing module is further configured to control the drive module to extend or retract the tractor treads to a second width less than a first width to fit the mobility platform in the upcoming portion of the downhole environment. The computing module is responsive to the received command to control the drive module to drive the tractor treads to move the mobility platform to and within the upcoming portion of the downhole environment. The sensor module includes a camera for capturing an image of the downhole environment. The computing module is further configured to transmit the image to the control apparatus, which includes a display and displays the image on the display. The displayed image is conveyable to the user. The controller is further configured to await a second command whether to move the mobility platform into the upcoming portion of the downhole environment. The sensor module, computing module, and drive module can be interconnected. The sensor module, computing module, and drive module can be removably interconnected. Each of the sensor module, computing module, and drive module have housings that are substantially cylindrical with a respective module longitudinal axis. The sensor module, computing module, and drive module are interconnected with the respective longitudinal axes substantially aligned to form the mobility platform and to define a substantially cylindrical shape along a mobility platform longitudinal axis. The tractor treads are extended or retracted laterally relative to the mobility platform longitudinal axis. The sensor module includes a sensor emitting a detection signal in a forward direction at an acute angle to the mobility platform longitudinal axis for detecting the feature. The computing module controls the drive module using wireless signals.

In a further embodiment, a method comprises interconnecting a plurality of modules. The plurality of modules comprise at least a drive module. The interconnected modules define a mobility platform. The method further includes deploying the mobility platform into a downhole environment, detecting a feature of the downhole environment, determining a width of an upcoming portion of the downhole environment, moving a tractor tread from the drive module to fit the mobility platform into the upcoming portion, and advancing the mobility platform into the upcoming portion of the downhole environment. The moving of the tractor tread comprises either extending the tractor tread from the drive module or retracting the tractor tread toward the drive module prior to advancing the mobility platform into the upcoming portion of the downhole environment.

Any combinations of the various embodiments and implementations disclosed herein can be used in a further embodiment, consistent with the disclosure. These and other aspects and features can be appreciated from the following description of certain embodiments presented herein in accordance with the disclosure and the accompanying drawings and claims.

### BRIEF DESCRIPTION OF THE DRAWINGS

FIG. 1 is a top front side perspective view of a mobility platform with tractor treads in a retracted configuration according to an embodiment.
FIG. 2 is a top front side perspective view of the mobility platform of FIG. 1 with the tractor treads in a fully extended configuration.
FIG. 3 is a side cross-sectional view of a drive module of the platform with the tractor treads in a partially extended configuration.
FIG. 4 is a side cross-sectional view of the drive module of FIG. 3 with the tractor treads in a fully extended configuration.
FIG. 5 is a forward elevational view of the mobility platform in the retracted configuration of FIG. 1.
FIG. 6 is a forward elevational view of the mobility platform in the fully extended configuration of FIG. 2.
FIG. 7 is a side elevational view of a sensor module of the mobility platform.
FIG. 8 is a front elevational view of the sensor module of FIG. 7.
FIG. 9 is a side elevational view of the components of the sensor module of FIG. 7.
FIG. 10 is a front elevational view of the components of the sensor module of FIG. 7.
FIG. 11 is a front top side perspective view of the components of the sensor module of FIG. 7.
FIG. 12 is a front top side perspective view of representation of the ranges of detection of the sensor module of FIG. 7.
FIG. 13 is a top front view of a control apparatus for the mobility platform.

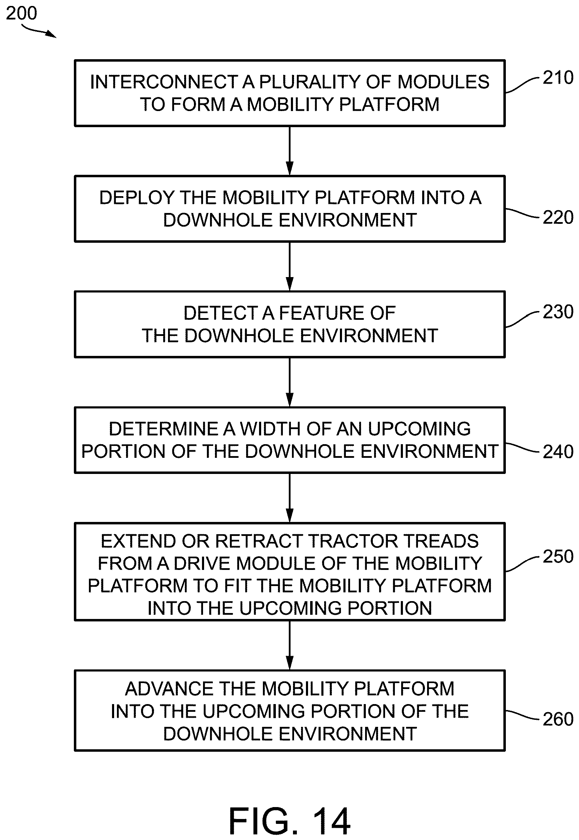

FIG. 14 is a flowchart of a method for operating the mobility platform.

It is noted that the drawings are illustrative and are not necessarily to scale.

### DETAILED DESCRIPTION OF CERTAIN EMBODIMENTS OF THE DISCLOSURE

Example embodiments consistent with the teachings included in the present disclosure are directed to a modular mobility platform capable of traveling through diverse downhole environments, as well as a system and method using such a modular mobility platform.

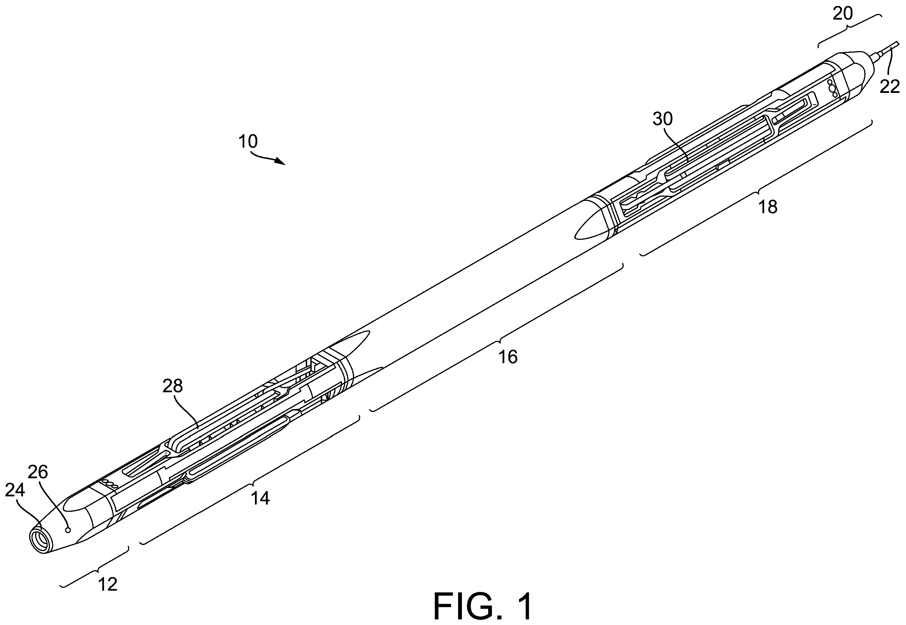

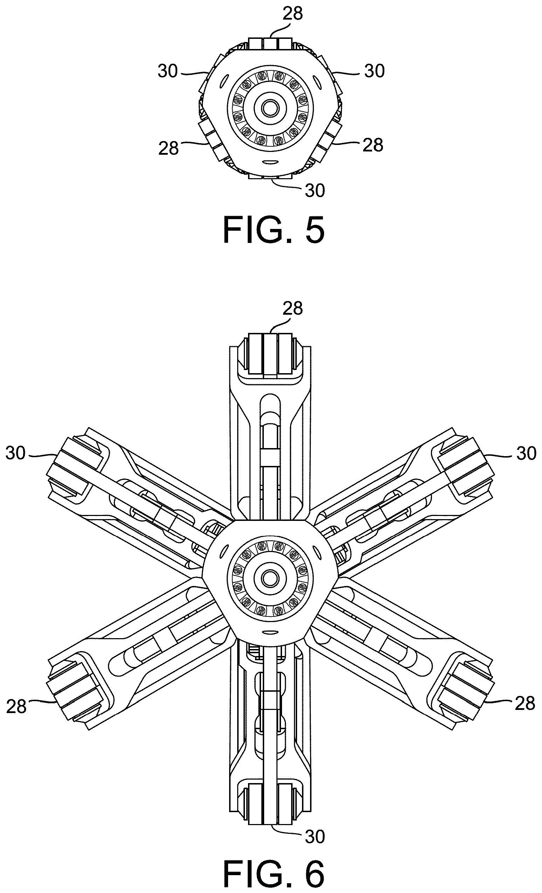

As shown in FIGS. 1-12, the mobility platform 10 includes a plurality of interconnected modules 12-20 for traveling through downhole environments having diverse geometries. The modules 12-20 have respective housing that are generally cylindrical and elongated with longitudinal axes, or that are sized so that the overall shape of the mobility platform 10 can be defined as a generally cylindrical robot, as illustrated. When interconnected with one end of a module to an end of another module, the modules 12-20 constitute the mobility platform 10 which, as noted, is generally cylindrical and elongated. The modules 12-20 can be removably connected such that the modules 12-20 are secured to each other to form the platform 10. Such cylindrical and elongated configurations of the platform 10 and its modules 12-20 have a common longitudinal axis, and a minimum lateral width of, for example, about 2.585 inches (about 6.566 cm.), as shown in FIG. 5. Such a minimum lateral width allows the platform 10 to pass through a downhole environment of a larger lateral width relative to a longitudinal axis of the platform 10.

The mobility platform 10 carries instruments capable of navigating and inspecting the downhole environments. Referring to FIG. 1, the modules can include a sensor module 12, a first drive module 14, a computing module 16, and second drive module 18, and a connector module 20 which is attached to a tether from a rig above ground on the surface of the Earth. The sensor module 12 is positioned at a front end of the platform 10, and the connector module 20 is positioned at a rear end of the platform 10. Through the tether, the connector module 20 can provide power from the rig to at least the second drive module 18.

The sensor module 12 can include a housing with apertures through which a camera 24 and a Time of Flight (ToF) sensor 26 can detect the downhole environment and local geological geometry at the front end of the platform 10. As with other modules described herein, each is associated with a hardware processor and a memory unit which contains code. The code is loaded from the memory into the processor and configures the processor to implement the functionality of the respective module, such as the sensor module 12.

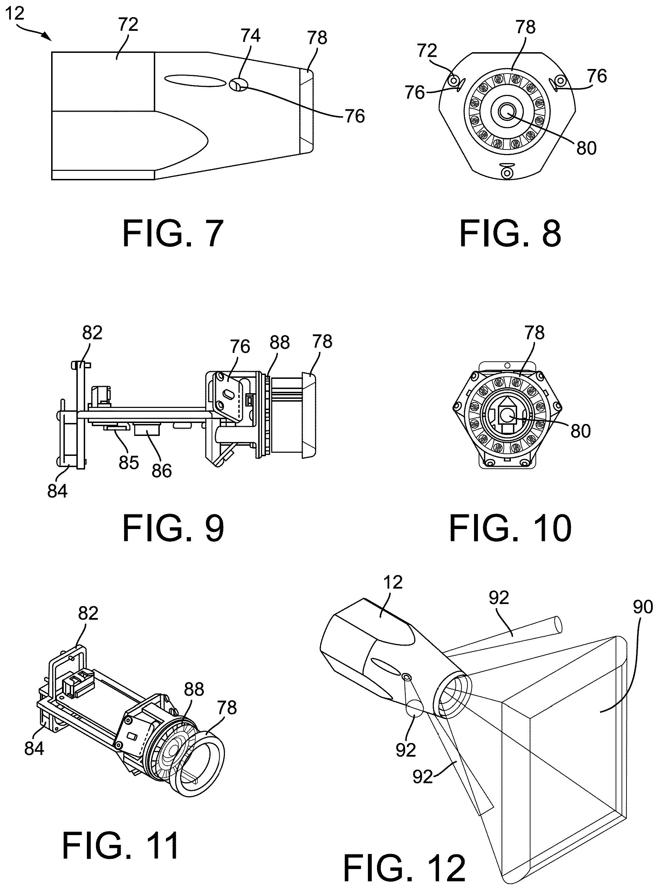

The sensor module 12 is described in greater detail below with reference to FIGS. 7-12. With the camera 24 and ToF sensor 26, the platform 10 can operate in an autonomous mode, under control of code executing in one or more processors, to move forward and navigate through the downhole environment. Alternatively, the images and ToF data from the camera 24 and ToF sensor 26 can be relayed to an operator outside of the downhole, such as in a position on the surface of the Earth. Accordingly, the platform 10 can operate in a semi-autonomous mode by which the operator processes the images and ToF data, and instructs the platform 10, through communications transmitted through the tether 22, to move forward or backward within the downhole environment. As such, in this alternative arrangement, the platform operates under control of code executing in one or more processors and, further, in compliance with any commands that may have been received from a user. In a further alternative embodiment constructed with at least one processor executing locally on the platform 10, the operator instructs the platform 10 using signals provided to the computing module 16 to locally control the movement of the platform 10. Such signals can be radio waves.

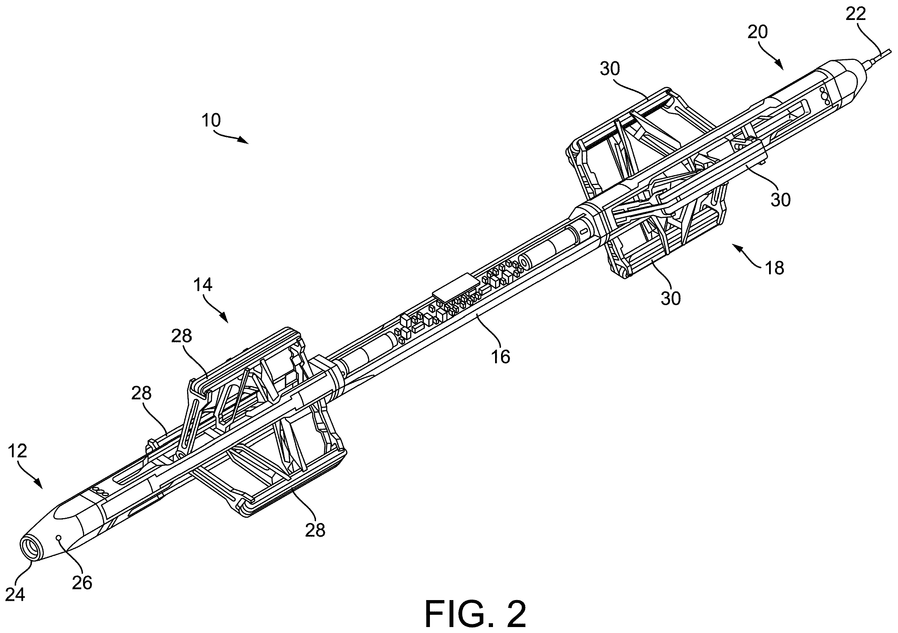

Referring again to FIG. 1, the drive modules 14, 18 can include tractor treads 28, 30, respectively, which can be retracted or extended laterally relative to the longitudinal axis. FIG. 1 is a top front side perspective view of a mobility platform 10 with the tractor treads 28 in a retracted configuration, and FIG. 2 is a top front side perspective view of the mobility platform 10 with the tractor treads 30 in a fully extended configuration. In the example embodiment of FIGS. 1-2, the retraction and extension of the tractor treads 28, 30, as well as the motive operation of the tractor treads 28, 30 is controlled by the computing module 16. The computing module 16 is associated with a hardware processor and a memory unit which contains code, and this can be the same processor and memory used by other modules, or a different processor and memory. The computing module implements code loaded from the memory which configures the processor to implement the functionality of the computing module 16, including control of a drive module or of plural drive modules. In an alternative embodiment, since the platform 10 is modular, the platform 10 can accommodate any number of drive modules such as the drive modules 14, 18 required for the specific application of the platform 10 in the downhole environment. For example, modules can be linked together with one computing module for every two drive modules. The specific applications can include cameras and other types of detectors which are laterally oriented on a computing module for inspecting the walls of the well or pipe. Alternatively, the lateral cameras and detectors can be included in a detection module configured differently from the computing module. An alternative application can include a repair module having laterally retractable and extendable arms for repairing a wall or the well or pipe.

In an embodiment, shown in FIGS. 1-2, each drive module 14, 18 has three tractor treads 28, 30, respectively. The three tractor treads of a specific drive module are spaced about the longitudinal axis by, for example, about 120°, as shown in FIG. 2. Such angular differences between the treads of a specific drive module provide greater stability of the respective drive module when the arms including the treads of the respective drive module are extended and pre-loaded against the downhole walls. In an alternative embodiment, a drive module can have two tractor treads spaced about the longitudinal axis by about 180°. In a further alternative embodiment, a drive module can have four tractor treads spaced about the longitudinal axis by about 90°. In another alternative embodiment, a drive module can have only one tractor tread. In additional alternative embodiments, a drive module with at least two tractor treads can have such tractor treads spaced about at diverse angles. In an example of such diverse angular configurations, the three tractor treads 28 of the first drive module 14 in FIG. 2 can have two tractor treads spaced about the longitudinal axis by about 180°, and the third tractor tread spaced about the longitudinal axis by about 90° from the other two tractor treads, forming a "T" configuration of tractor treads.

In an embodiment as shown in FIGS. 1-2, the second drive module 18 is configured to have the tractor treads 30 rotated by an angle relative to the longitudinal axis and relative to the tractor treads 28 of the first drive module 14. For example, as shown in FIGS. 5-6, the tractor treads 28, 30 are spaced about 60°. Such angular differences between the treads 28, 30 provide greater stability of the overall platform 10 when the arms including the treads 28, 30 are extended and pre-loaded against the downhole walls.

Each drive module 14, 18 has two subsystems: a preload system and a drive system. The drive system actuates the treads 28, 30 on each of the modules 14, 18, respectively, using a worm-gear drive, allowing the platform 10 to move longitudinally forward and backward. The drive module(s) are associated with a hardware processor and a memory unit which contains code. The code is loaded from the memory into the processor and configures the processor to implement the functionality of the drive modules 14, 18. As noted above, the processor and memory can be dedicated to the respective drive modules 14, 18, or can be associated with other modules, depending on the particular implementation approach.

Under control of code executing to implement each respective drive module, each of the treads 28, 30 on arms of the drive modules 14, 18, respectively, can retract and extend independently, although the treads of a specific drive module are linked together by the worm gear drive for radial symmetry. Also under control of code executing to implement each respective drive module, the preload system controls the lateral distance of the platform 10 from the downhole walls by extending and retracting the arms of each drive module. The preload system and the drive system are actuated using one motor for each subsystem in the illustrated embodiment. Under control of code executing each respective drive module, a preload motor turns the leadscrew and applies a preload of the treads against the downhole wall by moving the arms radially. In addition, under control of code executing each respective drive module, a drive motor is energized to drive the mobility platform 10 so as to move forward or in reverse in a direction parallel to the mobility platform longitudinal axis by moving the treads 28, 30.

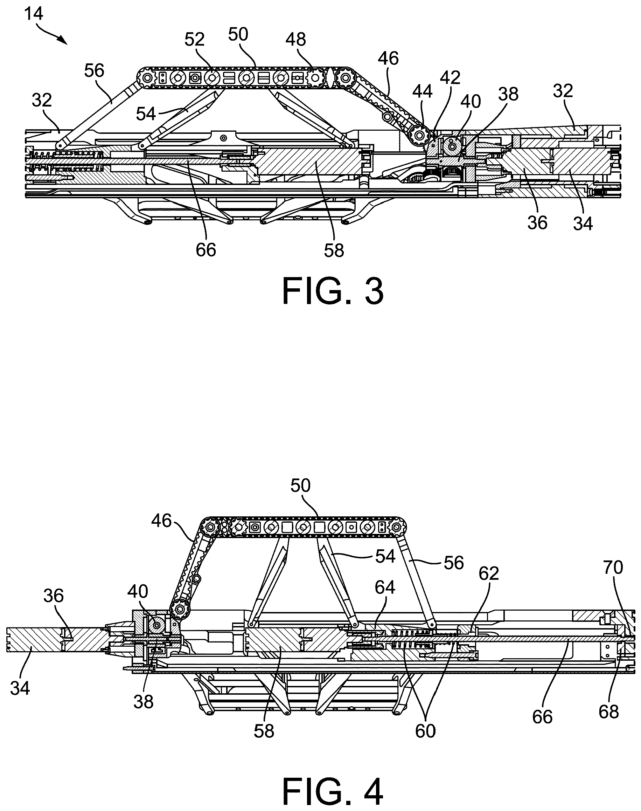

Referring to FIGS. 3-4 for an example drive module, such as the drive module 14, FIG. 3 is a side cross-sectional view of the drive module 14 with the tractor treads 28 in a partially extended configuration. FIG. 4 is a side cross-sectional view of the drive module 14 with the tractor treads 28 in a fully extended configuration. The drive module 14 has a housing 32 which includes, as the drive subsystem, a drive motor 34, a drive motor gearhead 36, a triple-drive worm gear 38, a drive pinion gear 40, a linkage idler gear 42, a linkage drive gear 44, a transmission belt 46, a track belt pulley 48, a drive belt 50, and at least one belt roller 52.

As shown in FIGS. 3-4, the drive subsystem of the drive module 14 is configured by code to provide for actuation of the drive belt 50, as the tread 28, wrapped around each of the three arms of the drive module 14, is driven by a motor. The three treads 28 are driven by, for example, a Maxon brushless EC-max 22 DC, as the drive motor 34, and are paired with a high-power planetary gearhead 36 with the reduction ratio of 128:1 in the illustrated embodiment as an example and not a constraint on any given implementation. The drive shaft of the gearhead 36 is connected to a worm gear 38. The triple-drive worm gear 38 meshes with three drive pinion gears 40 for symmetrical transmission of torque, with each pinion gear 40 providing the torque to actuate one of the three treads 28 on the drive module 14. The pinion gear 40 then transmits torque to an idler gear 42 which then meshes with a linkage drive gear 44 which directly drives the transmission belt 46. The transmission belt 46 then rotates the track belt pulley 48 to move the drive belt 50, as the tread 28, on a belt roller 52. Since the gear ratios in the drive subsystem are approximately 1: 1, there is little to no rotational speed reduction and hence no increase in torque between the worm gear 38 and linkage drive gears 44. Therefore, a high-power gearhead 36 is used with a large reduction ratio.

As shown in FIGS. 3-4, the preload subsystem includes arms 54, 56 which are extended or retracted radially relative to the longitudinal axis of the drive module 14. The arms 54, 56 are moved radially by a lead-screw motor having a gearhead 58. The gearhead 58 is connected to a lead screw 66 with dual preload springs 60 biasing the gearhead 58. The lead screw 66 passes through a lead-screw nut 62, and a lead-screw bushing 70 having a load cell 68.

The preload subsystem allows the arms having the treads 28 to extend to accommodate the various diameters that the platform 10 is expected to have the ability to traverse, as well as to retract to be stowed during traversal of a narrow well, such as a XN Nipple. The preload subsystem translates the three treads 28 radially towards/away from longitudinal axis. On each drive module 14, all three treads 28 are coupled and move together. The treads cannot be extended or retracted individually. However, the preload subsystem for each drive module can be extended or retracted independently of the other drive modules of the platform 10.

The preload subsystem of each drive module 14, 28 is driven by a motor. For example, the motor can comprise the Maxon brushless EC-max 22 DC motor 36. For the preload motor 36 in the illustrated embodiment, the planetary gearhead 6 with, for example, a reduction ratio of 128:1 is used to reduce the rotational speed and increase the torque of the leadscrew 66. The torque transmission starts at the brushless DC motor 36, when the paired planetary gearhead 36 turns the leadscrew 66, thereby moving the leadscrew nut 62 forward or backward along the longitudinal direction. The leadscrew nut 62 is threaded while the linkage slider 64 floats freely on the leadscrew 66. The leadscrew 66 and the leadscrew nut 62 are fastened with three shoulder screws that provide a gap for the preload compliance springs 60. As the leadscrew 66 moves, the nut 62 compresses the dual preload springs 60. The preload springs 60 then apply a force to the base of the actuation arms 54, 56. The lateral distance of the platform 10 from a downhole wall is controlled by moving the leadscrew nut 62 along the longitudinal direction. The preload force on the treads 28 pushes the arms 54, 56 downward towards the longitudinal axis, which in turn compresses the springs 60 and applies pressure on the loadcell 68 embedded within the leadscrew nut 62. The applied pressure on the loadcell 68 allows for a measurement of a preload force of the tread 28 against the downhole wall. The objective is to maintain a constant preload value by controlling the operating current of the drive motor 34, and reading the load values from the embedded loadcell 68.

The preload subsystem has both active and passive compliance. The passive compliance is in the preload springs 60 which float between the leadscrew nut 62 and the linkage slider 64 allowing the linkage arms 54, 56 some freedom of movement even when the nut 62 is fixed in position. The active compliance is in the constant adjustment of operating current of the drive motor 34 according to the readings from the loadcell 68 embedded in the leadscrew nut 62 and keeping the preload value within an optimal range.

In an alternative embodiment, a limit switch can be positioned in the housing 32 of the drive module 14. The limit switch can be triggered when the leadscrew nut 62 is in the fully collapsed position and is used mainly for homing purposes. After the homing procedure is complete, the position of the limit switch can be known, for example, with the treads 28 in a fully-retracted position. The drive motor 34 can include hall sensors in certain embodiments. Using pulse-counting on the hall sensors, the fully extended position of the nut 62 can be calculated within an on-board processor. Software executing in the computing module 16 can implement soft stops before the leadscrew nut 62 reaches two integral positions.

Referring to FIGS. 5-6, FIG. 5 is a forward elevational view of the mobility platform 10 with the treads 28, 30 in the retracted configuration of FIG. 1, and FIG. 6 is a forward elevational view of the mobility platform 10 with the treads 28, 30 in the fully extended configuration of FIG. 2. For transitioning between downhole environments of different lateral widths, the mobility platform 10 utilizes a continuous drive mechanism while travelling through a downhole environment such as a pipe, under control of the program executing in its associated processor, optionally in compliance with any command from a user that may have been received. For example, both drive modules 14, 18 are driven simultaneously for uninterrupted linear movement. While moving from one downhole size to another, the platform 10, using one or more sensors in a suitably configured module such as the sensor module 12, detects the transition, and issues control signals to the computing module 16 to either retract or extend the treads 28, 30 on the arms 54, 56 depending on the transition type. In one example, the treads 28, 30 are retracted to pass through an XN-nipple, and are extended to preload against open-hole or washout.

As shown in FIG. 5, the minimum width of the platform 10 is about 2.585 inches (about 6.566 cm.), while the maximum width is about 8.6 inches (about 21.84 cm.), as shown in FIG. 6. Such a maximum diameter of the fully extended platform 10 is slightly less than an average washout width of about 9 inches (about 22.86 cm.). Alternatively, the drive modules 14, 28 can have longer linkages such as longer arms 54, 56 to accommodate a wider range of downhole widths.

Transversal of an XN-nipple requires at least two drive modules, since one of the drive modules needs to be extended and preloaded against the pipe wall to support the platform 10, while the other drive module is retracted to pass through the constriction of the XN-nipple. No matter how many drive modules are incorporated into a different configuration of the platform 10, the process of passing through a constriction remains the same. Each drive module retracts and passes through the XN-nipple while being supported by the other drive modules. Such retraction and extension of arms 54, 56 and treads 28, 30 can be performed for each drive module until the end of the platform 10 clears the constriction of a narrow downhole environment such as an XN-nipple.

For the drive modules 14, 18, power to the motor 36 can be supplied by at least one battery internal to the drive modules 14, 18. The battery can be rechargeable. Alternatively, for any drive module attached to the connector 20, such as the drive module 18 in FIGS. 1-2, power can be supplied directly to the motor 36 by electrical connections through the connector 20 from the tether 22. In a further alternative embodiment, power supplied from the tether 22 through the connector 20 can charge a rechargeable battery internal to the drive module 18. Power can be conveyed to each of the respective modules by an electrical connection associated with the interconnection of any particular arrangement of modules.

Referring to FIGS. 1-2, the computing module 16 is positioned in an intermediate location among the various modules 12-20 of the platform 10. The computing module 16 includes a housing for retaining a motor controller, a core processing unit ("processor," as previously described), and memory for storing code, settings, and data collected during the downhole travel, all connected to the motor controller. This is used to control the nearby drive modules 14, 18. The housing can be composed of aluminum. The computing module 16 can also include a separate heat sink thermally connected to the aluminum housing for dissipating heat during operation of the platform 10. In an alternative embodiment, a heat sink pattern is milled into an aluminum base of the computing module 16 to ensure good thermal contact and heat dissipation during operation of the platform 10. In an embodiment, the computing module 16 has no external sensors or effectors, and so is dedicated to communicating with and controlling other modules in the platform 10. In an alternative embodiment, the computing module 16 can include external sensors or effectors for detecting and performing actions, respectively, in intermediate locations in the downhole environment relative to the overall length of the platform 10.

Each end of the computing module 16 is connected to an adjacent drive module 14, 18, respectively. The motor controller can be directly connected to the drive motor 34 of an adjacent drive module, such as the drive module 14. Accordingly, signals from the motor controller are communicated to the drive motor 34 to control the application of electricity from the battery of the drive module 14 to the drive motor 34. In an alternative embodiment, the motor controller and the drive motor 34 can be connected to respective wireless communication units. Using the wireless communication units, the motor controller can wirelessly control the drive motor 34 of the drive module 14. The wireless control can be performed using WIFI, BLUETOOTH, or other known communication protocols.

Using the motor controller and the core processing unit, the computing module 16 can perform local, closed loop motion and preload control by virtue of the logic being implemented by the code executing in the processor. In conjunction with data gathered from the sensor module 12, the platform 10 implements autonomous position estimation of the platform 10, downhole feature detection, and downhole feature navigation, or, in certain implementations, semi-autonomous downhole feature navigation in response to commands received from a remote user. Using the data gathered from the sensor module 12, the code executing in the processor of the computing module 16 determines a feature in an upcoming portion of the downhole environment. The code determines a width of the upcoming portion of the downhole environment from the feature. The computing module 16 uses first predetermined logic implemented by the code executing in the processor. By using the first predetermined logic, the computing module 16 generates a first signal, transmitted to the drive modules 14, 18, which causes the arms 54, 56 and treads 28, 30 to extend or retract in order to preload the treads 28, 30 against the walls of the downhole environment to fit the mobility platform 10 into the upcoming portion. The computing module 16 uses second predetermined logic implemented by the code executing in the processor. By using the second predetermined logic, the computing module 16 generates a second signal, transmitted to the drive modules 14, 18, to rotate the treads 28, 30. The treads 28, 30 are preloaded against the walls of the downhole environment. Accordingly, the mobility platform 10 advances into the upcoming portion of the downhole environment.

Referring to FIGS. 7-12, the sensor module 12 includes a housing 72 with an aperture 74 in which is disposed at least one ToF sensor 76. In an embodiment, the sensor module 12 as three ToF sensors 76 spaced about 120° around the longitudinal axis of the sensor module 12. Referring to FIGS. 7-11, a light diffusor 78 is positioned at the front of the housing 72. A camera 80 can obtain images through an open central region of the light diffusor 78. Referring to FIGS. 9-11, an inner chassis 82 supports the components within the housing 72. A cooling fan 84 cools the electronic components in the housing 72. A processor 85 which implements code is configured to interact with the ToF sensor 76 and the camera 80 to collect distance data and images, respectively.

The processor 85 includes a wireless communication device 86 for wirelessly transmitting the distance data and images to the computing module 16. In addition, the wireless communication device 86 receives control signals from the computing module 16 for controlling the components within the sensor module 12. The wireless communication device 86 has an antenna for transmitting and receiving signals using WIFI, BLUETOOTH, or other known communication protocols.

The housing 72 also includes a ring 88 of light emitting devices, such as light emitting diodes (LEDs), incandescent lights, or other known light emitting devices. The ring 88 extends around the longitudinal axis of the sensor module 12, and is configured to emit light which is then diffused by the light diffusor 78. The ring 88 and light diffusor 78 illuminate the frontward direction of the sensor module 12, allowing the camera 80 to capture images in the frontward direction of the platform 10. FIG. 12 illustrates a Field of View (FoV) 90 of the camera 80 in the frontward direction. Such images are then transmitted by the processor 85, using the wireless communication device 86, to the computing module 16. The camera 80 can be, for example, an 8 Megapixel camera. The camera 80 can capture still images. Alternatively, the camera 80 can be a video camera which can stream real-time video from the front perspective of the platform 10.

Each ToF sensor 76, as a range sensor, can emit signals through the aperture 74, in a range 92 represented in FIG. 12. The emitted signals are transmitted in a forward direction at an acute angle of, for example, about 45° relative to the longitudinal axis of the platform 10. The emitted signals can be light, radio waves, microwaves, or ultrasound which are reflected by forward-located features in the downhole environment. The reflected signals are detected by the ToF sensor 76, and converted to be the distance data transmitted to the computing module 16. The ToF sensor 76 allows the platform 10 to estimate the width of the downhole environment in front of the platform 10, which improves the fidelity of the preload system and allows for autonomous traversal of downhole environments with different widths, such as an XN-Nipple.

Referring to FIGS. 1-2, the connector module 20, disposed in the rear end of the platform 10, can also include at least one ToF sensor as a range sensor, operating in a manner identical to the at least one ToF sensor 76. Such a configuration of the connector module 20 with a ToF sensor allows the platform 10 to detect rearward downhole features when the platform 10 moves rearward, for example, during extraction of the platform 10 from the downhole environment. In an embodiment, the connector module 20 does not include a camera or a light-emitting ring, due to the presence of the tether 22. In an alternative embodiment, the connector module 20 can include a camera and a light emitting ring, with the camera having a FoV directed off of the longitudinal axis of the platform 10 to accommodate the presence of the tether 22.

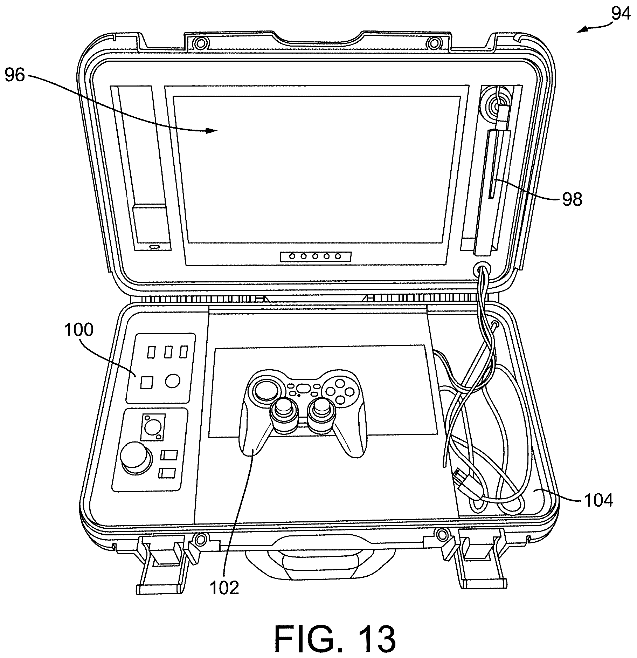

The present disclosure also includes a system having at least the mobility platform 10 and a control apparatus 94, shown in FIG. 13. The platform 10 is in communication with the control apparatus 94, for example, by wireless communications from the computing module 16. Alternatively, the platform 10 can transmit data to the apparatus 94 through the tether 22. The control apparatus 94 includes a display 96, a wireless antenna 98, a control panel 100, and a hand-held controller 102 mounted in a housing 104. The housing 104 can be adapted to be a carry case for transporting the control apparatus 94 to a site where the platform 10 is to operate.

The display 96 can display images from the camera 80, and can also display distance data from the measurements of the ToF sensor 76. The wireless antenna 98 is configured to operate at the frequency of the wireless communications of the computing module 16. Through the wireless antenna 98, the control apparatus 94 can communicate with the computing module 16 using WIFI, BLUETOOTH, or other known communication protocols. The hand-held controller 102 can be a teleop joystick, resembling a game controller, for instructing the mobility platform 10 to move forward or rearward.

The present disclosure also includes a method 200 for operating the mobility platform 10. The method 200 includes the step of interconnecting a plurality of modules to form the mobility platform 10, including a sensor module, a drive module, and a computing module in step 210. The step of interconnecting can include physically joining discrete modules with a rigid coupling or a joint which allows relative angles to be achieved from one module to a next during traversal of a downhole environment. The method includes deploying the so-connected modules as a unified mobility platform 10 into a downhole environment in step 220. Once in the downhole environment, the method includes detecting a feature of the downhole environment in step 230, determining a width of an upcoming portion of the downhole environment in step 240, and extending or retracting tractor treads from a drive module in step 250 in order to fit the mobility platform 10 within the upcoming portion of the downhole environment. Each of these steps can be implemented using the modules described above. The method proceeds with the mobility platform 10 advancing into the upcoming portion of the downhole environment in step 260.

Portions of the methods described herein can be performed by software or firmware in machine readable form on a tangible (e.g., non-transitory) storage medium. For example, the software or firmware can be in the form of a computer program including computer program code adapted to cause the modular mobility platform to perform various actions described herein when the program is run on a computer or suitable hardware device, and where the computer program can be embodied on a computer readable medium. Examples of tangible storage media include computer storage devices having computer-readable media such as disks, thumb drives, flash memory, and the like, and do not include propagated signals. Propagated signals can be present in a tangible storage media. The software can be suitable for execution on a parallel processor or a serial processor such that various actions described herein can be carried out in any suitable order, or simultaneously.

It is to be further understood that like or similar numerals in the drawings represent like or similar elements through the several figures, and that not all components or steps described and illustrated with reference to the figures are required for all embodiments or arrangements.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "contains", "containing", "includes", "including," "comprises", and/or "comprising," and variations thereof, when used in this specification, specify the presence of stated features, integers, steps, operations, elements, and/or components, but do not preclude the presence or addition of one or more other features, integers, steps, operations, elements, components, and/or groups thereof.

Terms of orientation are used herein merely for purposes of convention and referencing and are not to be construed as limiting. However, it is recognized these terms could be used with reference to an operator or user. Accordingly, no limitations are implied or to be inferred. In addition, the use of ordinal numbers (e.g., first, second, third) is for distinction and not counting. For example, the use of "third" does not imply there is a corresponding "first" or "second." Also, the phraseology and terminology used herein is for the purpose of description and should not be regarded as limiting. The use of "including," "comprising," "having," "containing," "involving," and variations thereof herein, is meant to encompass the items listed thereafter and equivalents thereof as well as additional items.

## Claims

1. A mobility platform (10) capable of traveling in a downhole environment, the mobility platform comprising:
a sensor module (12), a drive module (14), and a computing module (16) disposed along a mobility platform longitudinal axis, with the sensor module (12) disposed at a distal end of the mobility platform (10) and configured to detect a feature of the downhole environment, the drive module (14) disposed adjacent to the sensor module (12) and having tractor treads (28), and the computing module (16) disposed adjacent to the drive module (14) and configured to (i) determine a first width of an upcoming portion of the downhole environment from the feature and (ii) control the drive module (14) to drive the tractor treads (28) to move the mobility platform (10) in the upcoming portion of the downhole environment,
wherein:
the sensor module (12) has a sensor housing (72);
the drive module (14) has a drive housing (32), wherein the tractor treads (28) are extendable from the drive housing (32) and retractable into the drive housing (32);
the computing module (16) has a computing housing and is configured to control the drive module (14) to extend the tractor treads (28) from the drive housing (32) or retract the tractor treads (28) into the drive housing (32), to have a second width less than a first width to fit the mobility platform (10) in the upcoming portion;
**characterized by**:
the drive module (14) comprises a preload system configured to apply a preload of the tractor treads (28) against a wall of the downhole environment, wherein the preload system comprises:
a lead screw motor configured to rotate a lead screw (66);
a lead screw nut (62) threaded on the lead screw (66), wherein the lead screw motor is operable to move the lead screw nut (62) forward or backward within the drive housing (32);
arms (54, 56) extendable from the drive housing (14) and retractable into the drive housing (14) by adjusting a position of the lead screw nut (62) within the drive housing (32), wherein a preload spring (60) is disposed between the lead screw nut (62) and a base of each arm (54, 56); and
a loadcell configured to measure a preload force that corresponds to compression of the preload spring (60); and
the computing system (16) is further configured to control the drive module to maintain a constant preload force.

2. The mobility platform (10) of claim 1, wherein the sensor module (12), computing module (16), and drive module (14) are interconnected.

3. The mobility platform (10) of claim 2, wherein the sensor module (12), computing module (16), and drive module (14) are removably interconnected.

4. The mobility platform (10) of claim 1, wherein each of the sensor housing (72), computing housing, and drive housing (32) is substantially cylindrical with a respective module longitudinal axis.

5. The mobility platform (10) of claim 4, wherein the sensor module (12), computing module (16), and drive module (14) are interconnected with the respective module longitudinal axes substantially aligned to form the mobility platform (10) and to define a substantially cylindrical shape along the mobility platform longitudinal axis.

6. The mobility platform (10) of claim 5, wherein the tractor treads (28) are extended or retracted laterally relative to the mobility platform longitudinal axis.

7. The mobility platform (10) of claim 5, wherein the sensor module (12) includes a sensor (76) emitting a detection signal in a forward direction at an acute angle to the mobility platform longitudinal axis for detecting the feature.

8. The mobility platform (10) of claim 1, wherein the computing module (16) controls the drive module (14) using wireless signals.

9. A system comprising:
a control apparatus (94) having a controller (102) for a user to enter a command; and
the mobility platform (10) of any preceding claim,
wherein the computing module (16) is further configured to:
receive the command, and
responsive to the received command, control the drive module (14) to drive the tractor treads (28) to move the mobility platform (10) to and within the upcoming portion of the downhole environment.

10. The system of claim 9, wherein the sensor module (12) includes a camera (80) for capturing an image of the downhole environment,
wherein the computing module (16) is further configured to transmit the image to the control apparatus (94), and
wherein the control apparatus (94) includes a display (96) and displays the image on the display (96).

11. The system of claim 10, wherein the displayed image is conveyable to the user and wherein the controller (102) is further configured to await a second command whether to move the mobility platform (10) into the upcoming portion of the downhole environment.

12. A method (200), including:
interconnecting a plurality of modules (12, 14, 16) to form a mobility platform (10), the plurality of modules (12, 14, 16) including a sensor module (12), a drive module (14), and a computing module (16) disposed along a mobility platform longitudinal axis, with the sensor module (12) disposed at a distal end of the mobility platform (10) and configured to detect a feature of the downhole environment, the drive module (14) disposed adjacent to the sensor module (12) and having tractor treads (28) and a preload system configured to apply a preload of the tractor treads (28) against a wall of the downhole environment, and the computing module (16) disposed adjacent to the drive module (14) and configured to determine a first width of an upcoming portion of the downhole environment from the feature and control the drive module (14) to drive the tractor treads (28) to move the mobility platform (10) in the upcoming portion of the downhole environment,
providing the drive module (14) with a drive housing (32) with the tractor treads (28) extendable from the drive housing (32) and retractable into the drive housing (32);
controlling, using the computing module (16), the drive module (14) to extend the tractor treads (28) from the drive housing (32) or retract the tractor treads (28) into the drive housing (32), to have a second width less than a first width to fit the mobility platform (10) in the upcoming portion; and
moving (250) the tractor treads (28) from the drive housing (32) or into the drive housing (32) to fit the mobility platform (10) into the upcoming portion;
wherein the preload system comprises:
a lead screw motor configured to rotate a lead screw (66);
a lead screw nut (62) threaded on the lead screw (66), wherein the lead screw motor is operable to move the lead screw nut (62) forward or backward within the drive housing (32);
arms (54, 56) extendable from the drive housing (14) and retractable into the drive housing (14) by adjusting a position of the lead screw nut (62) within the drive housing (32), wherein a preload spring (60) is disposed between the lead screw nut (62) and a base of each arm (54, 56); and
a loadcell configured to measure a preload force that corresponds to compression of the preload spring (60),
wherein the method further comprises controlling, using the computing system (16), the drive module to maintain a constant preload force.

13. The method (200) of claim 12, wherein moving (250 the tractor tread (28) comprises either extending (250) the tractor tread (28) from the drive housing (32) or retracting the tractor tread (28) into the drive housing (32) prior to advancing the mobility platform (10) into the upcoming portion of the downhole environment.

## Patentansprüche

1. Mobilitätsplattform (10), die in der Lage ist, sich in einer Bohrlochumgebung zu bewegen, wobei die Mobilitätsplattform Folgendes umfasst:
ein Sensormodul (12), ein Antriebsmodul (14) und ein Rechenmodul (16), die entlang einer Mobilitätsplattform-Längsachse angeordnet sind, wobei das Sensormodul (12) an einem distalen Ende der Mobilitätsplattform (10) angeordnet und dazu ausgelegt ist, ein Merkmal der Bohrlochumgebung zu detektieren, wobei das Antriebsmodul (14) benachbart zum Sensormodul (12) angeordnet ist und Laufketten (28) aufweist, und das Rechenmodul (16) benachbart zum Antriebsmodul (14) angeordnet und dazu ausgelegt ist, (i) eine erste Breite eines bevorstehenden Abschnitts der Bohrlochumgebung anhand des Merkmals zu bestimmen und (ii) das Antriebsmodul (14) zu steuern, um die Laufketten (28) derart anzutreiben, dass sie die Mobilitätsplattform (10) im bevorstehenden Abschnitt der Bohrlochumgebung bewegen,
wobei:
das Sensormodul (12) ein Sensorgehäuse (72) aufweist;
das Antriebsmodul (14) ein Antriebsgehäuse (32) aufweist, wobei die Laufketten (28) aus dem Antriebsgehäuse (32) ausfahrbar und in das Antriebsgehäuse (32) einziehbar sind;
das Rechenmodul (16) ein Rechengehäuse aufweist und dazu ausgelegt ist, das Antriebsmodul (14) zu steuern, um die Laufketten (28) aus dem Antriebsgehäuse (32) auszufahren oder die Laufketten (28) in das Antriebsgehäuse (32) einzuziehen, um eine zweite Breite, die kleiner ist als eine erste Breite, aufzuweisen, damit die Mobilitätsplattform (10) in den bevorstehenden Abschnitt passt;
**dadurch gekennzeichnet, dass**
das Antriebsmodul (14) ein Vorspannsystem umfasst, das dazu ausgelegt ist, eine Vorspannung der Laufketten (28) gegen eine Wand der Bohrlochumgebung zu beaufschlagen, wobei das Vorspannsystem Folgendes umfasst:
einen Leitspindelmotor, der dazu ausgelegt ist, eine Leitspindel (66) zu drehen;
eine Leitspindelmutter (62), die auf die Leitspindel (66) geschraubt ist, wobei der Leitspindelmotor betreibbar ist, um die Leitspindelmutter (62) innerhalb des Antriebsgehäuses (32) vorwärts oder rückwärts zu bewegen;
Schenkel (54, 56), die aus dem Antriebsgehäuse (14) ausfahrbar sind und in das Antriebsgehäuse (14) einfahrbar sind, indem eine Position der Leitspindelmutter (62) innerhalb des Antriebsgehäuses (32) eingestellt wird, wobei eine Vorspannfeder (60) zwischen der Leitspindelmutter (62) und einer Basis jedes Schenkels (54, 56) angeordnet ist; und
eine Kraftmessdose, die dazu ausgelegt ist, eine Vorspannkraft zu messen, die einer Kompression der Vorspannfeder (60) entspricht; und
wobei das Rechensystem (16) ferner dazu ausgelegt ist, das Antriebsmodul zu steuern, um eine konstante Vorspannkraft aufrechtzuerhalten.

2. Mobilitätsplattform (10) nach Anspruch 1, wobei das Sensormodul (12), das Rechenmodul (16) und das Antriebsmodul (14) miteinander verbunden sind.

3. Mobilitätsplattform (10) nach Anspruch 2, wobei das Sensormodul (12), das Rechenmodul (16) und das Antriebsmodul (14) entfernbar miteinander verbunden sind.

4. Mobilitätsplattform (10) nach Anspruch 1, wobei jedes aus dem Sensorgehäuse (72), dem Rechengehäuse und dem Antriebsgehäuse (32) im Wesentlichen zylindrisch mit einer entsprechenden Modullängsachse ist.

5. Mobilitätsplattform (10) nach Anspruch 4, wobei das Sensormodul (12), das Rechenmodul (16) und das Antriebsmodul (14) mit den entsprechenden Modullängsachsen verbunden sind, die im Wesentlichen ausgerichtet sind, um die Mobilitätsplattform (10) auszubilden und eine im Wesentlichen zylindrische Form entlang der Mobilitätsplattform-Längsachse zu definieren.

6. Mobilitätsplattform (10) nach Anspruch 5, wobei die Laufketten (28) relativ zur Mobilitätsplattform-Längsachse seitlich ausgefahren oder eingefahren sind.

7. Mobilitätsplattform (10) nach Anspruch 5, wobei das Sensormodul (12) einen Sensor (76) umfasst, der zum Detektieren des Merkmals ein Detektionssignal in einer Vorwärtsrichtung in einem spitzen Winkel zur Mobilitätsplattform-Längsachse emittiert.

8. Mobilitätsplattform (10) nach Anspruch 1, wobei das Rechenmodul (16) das Antriebsmodul (14) unter Verwendung von Drahtlossignalen steuert.

9. System, das Folgendes umfasst:
eine Steuervorrichtung (94) mit einer Steuerung (102), damit ein Benutzer einen Befehl eingeben kann; und
eine Mobilitätsplattform (10) nach einem der vorangegangenen Ansprüche,
wobei das Rechenmodul (16) ferner für Folgendes ausgelegt ist:
Empfangen des Befehls und
als Antwort auf den empfangenen Befehl Steuern des Antriebsmoduls (14), um die Laufketten (28) anzutreiben, um die Mobilitätsplattform (10) hin zum bevorstehenden Abschnitt der Bohrlochumgebung und innerhalb desselben zu bewegen.

10. System nach Anspruch 9, wobei das Sensormodul (12) eine Kamera (80) zum Aufnehmen eines Bilds der Bohrlochumgebung umfasst,
wobei das Rechenmodul (16) ferner dazu ausgelegt ist, das Bild an die Steuervorrichtung (94) zu übertragen, und
wobei die Steuervorrichtung (94) eine Anzeige (96) umfasst und das Bild auf der Anzeige (96) anzeigt.

11. System nach Anspruch 10, wobei das angezeigte Bild an den Benutzer übertragbar ist und wobei die Steuerung (102) ferner dazu ausgelegt ist, einen zweiten Befehl zum Bewegen der Mobilitätsplattform (10) in den bevorstehenden Abschnitt der Bohrlochumgebung abzuwarten.

12. Verfahren (200), das Folgendes umfasst:
Verbinden einer Vielzahl von Modulen (12, 14, 16) miteinander, um eine Mobilitätsplattform (10) auszubilden, wobei die Vielzahl von Modulen (12, 14, 16) ein Sensormodul (12), ein Antriebsmodul (14) und ein Rechenmodul (16), die entlang einer Mobilitätsplattform-Längsachse angeordnet sind, umfasst, wobei das Sensormodul (12) an einem distalen Ende der Mobilitätsplattform (10) angeordnet und dazu ausgelegt ist, ein Merkmal der Bohrlochumgebung zu detektieren, wobei das Antriebsmodul (14) benachbart zum Sensormodul (12) angeordnet ist und Laufketten (28) und ein Vorspannsystem aufweist, das dazu ausgelegt ist, eine Vorspannung der Laufketten (28) gegen eine Wand der Bohrlochumgebung zu beaufschlagen, und das Rechenmodul (16) benachbart zum Antriebsmodul (14) angeordnet und dazu ausgelegt ist, eine erste Breite eines bevorstehenden Abschnitts der Bohrlochumgebung anhand des Merkmals zu bestimmen und das Antriebsmodul (14) zu steuern, um die Laufketten (28) derart anzutreiben, dass sie die Mobilitätsplattform (10) im bevorstehenden Abschnitt der Bohrlochumgebung bewegen,
Bereitstellen des Antriebsmoduls (14) mit einem Antriebsgehäuse (32), wobei die Laufketten (28) aus dem Antriebsgehäuse (32) ausfahrbar und in das Antriebsgehäuse (32) einziehbar sind;
Steuern des Antriebsmoduls (14) unter Verwendung des Rechenmoduls (16), um die Laufketten (28) aus dem Antriebsgehäuse (32) auszufahren oder die Laufketten (28) in das Antriebsgehäuse (32) einzuziehen, um eine zweite Breite, die kleiner ist als eine erste Breite, aufzuweisen, damit die Mobilitätsplattform (10) in den bevorstehenden Abschnitt passt;
Bewegen (250) der Laufketten (28) von dem Antriebsgehäuse (32) oder in das Antriebsgehäuse, um die Mobilitätsplattform in den bevorstehenden Abschnitt einzubringen,
wobei das Vorspannsystem Folgendes umfasst:
einen Leitspindelmotor, der dazu ausgelegt ist, eine Leitspindel (66) zu rotieren;
eine Leitspindelmutter (62), die auf die Leitspindel (66) geschraubt ist, wobei der Leitspindelmotor betreibbar ist, um die Leitspindelmutter (62) innerhalb des Antriebsgehäuses (32) vorwärts oder rückwärts zu bewegen;
Schenkel (54, 56), die aus dem Antriebsgehäuse (14) ausfahrbar sind und in das Antriebsgehäuse (14) einziehbar sind, indem eine Position der Leitspindelmutter (62) innerhalb des Antriebsgehäuses (32) eingestellt wird, wobei eine Vorspannfeder (60) zwischen der Leitspindelmutter (62) und einer Basis jedes Schenkels (54, 56) angeordnet ist; und
eine Kraftmessdose, die dazu ausgelegt ist, eine Vorspannkraft zu messen, die einer Kompression der Vorspannfeder (60) entspricht; und
wobei das Verfahren ferner das Steuern des Antriebsmoduls unter Verwendung des Rechensystems (16) umfasst, um eine konstante Vorspannkraft aufrechtzuerhalten.

13. Verfahren (200) nach Anspruch 12, wobei das Bewegen (250) der Laufkette (28) vor dem Weiterbewegen der Mobilitätsplattform (10) in den bevorstehenden Abschnitt der Bohrlochumgebung entweder das Ausfahren (250) der Laufkette (28) aus dem Antriebsgehäuse (32) oder das Einziehen der Laufkette (28) in das Antriebsgehäuse (32) umfasst.

## Revendications

1. Plate-forme de mobilité (10) capable de se déplacer dans un environnement de fond de trou, la plate-forme de mobilité comprenant :
un module de capteur (12), un module d'entraînement (14) et un module de calcul (16) disposés le long d'un axe longitudinal de plate-forme de mobilité, le module de capteur (12) étant disposé au niveau d'une extrémité distale de la plate-forme de mobilité (10) et configuré pour détecter une caractéristique de l'environnement de fond de trou, le module d'entraînement (14) étant disposé adjacent au module de capteur (12) et présentant des bandes de roulement de tracteur (28), et le module de calcul (16) étant disposé adjacent au module d'entraînement (14) et configuré pour (i) déterminer une première largeur d'une partie à venir de l'environnement de fond de trou à partir de la caractéristique et (ii) commander le module d'entraînement (14) pour entraîner les bandes de roulement de tracteur (28) afin de déplacer la plate-forme de mobilité (10) dans la partie à venir de l'environnement de fond de trou,
dans lequel :
le module de capteur (12) présente un boîtier de capteur (72) ;
le module d'entraînement (14) présente un boîtier d'entraînement (32), dans lequel les bandes de roulement de tracteur (28) sont extensibles à partir du boîtier d'entraînement (32) et rétractables dans le boîtier d'entraînement (32) ;
le module de calcul (16) présente un boîtier de calcul et est configuré pour commander le module d'entraînement (14) afin d'étendre les bandes de roulement de tracteur (28) depuis le boîtier d'entraînement (32) ou de rétracter les bandes de roulement de tracteur (28) dans le boîtier d'entraînement (32), pour présenter une seconde largeur inférieure à une première largeur afin d'adapter la plate-forme de mobilité (10) dans la partie à venir ;
**caractérisé en ce que** :
le module d'entraînement (14) comprend un système de précharge configuré pour appliquer une précharge des bandes de roulement de tracteur (28) contre une paroi de l'environnement de fond de trou, dans lequel le système de précharge comprend :
un moteur de vis-mère est configuré pour faire tourner une vis-mère (66) ;
un écrou de vis-mère (62) vissé sur la vis-mère (66), dans lequel le moteur de vis-mère peut fonctionner pour déplacer l'écrou de vis-mère (62) vers l'avant ou vers l'arrière à l'intérieur du boîtier d'entraînement (32) ;
des bras (54, 56) extensibles à partir du boîtier d'entraînement (14) et rétractables dans le boîtier d'entraînement (14) en ajustant une position de l'écrou de vis-mère (62) à l'intérieur du boîtier d'entraînement (32), dans lequel un ressort de précharge (60) est disposé entre l'écrou de vis-mère (62) et une base de chaque bras (54, 56) ; et
une cellule de charge configurée pour mesurer une force de précharge qui correspond à une compression du ressort de précharge (60) ; et
le système de calcul (16) est en outre configuré pour commander le module d'entraînement afin de maintenir une force de précharge constante.

2. Plate-forme de mobilité (10) selon la revendication 1, dans laquelle le module de capteur (12), le module de calcul (16) et le module d'entraînement (14) sont interconnectés.

3. Plate-forme de mobilité (10) selon la revendication 2, dans laquelle le module de capteur (12), le module de calcul (16) et le module d'entraînement (14) sont interconnectés de manière amovible.

4. Plate-forme de mobilité (10) selon la revendication 1, dans laquelle chaque boîtier de capteur (72), du boîtier de calcul et du boîtier d'entraînement (32) est sensiblement cylindrique avec un axe longitudinal de module respectif.

5. Plate-forme de mobilité (10) selon la revendication 4, dans laquelle le module de capteur (12), le module de calcul (16) et le module d'entraînement (14) sont interconnectés avec les axes longitudinaux de module respectifs sensiblement alignés pour former la plate-forme de mobilité (10) et pour définir une forme sensiblement cylindrique le long de l'axe longitudinal de plate-forme de mobilité.

6. Plate-forme de mobilité (10) selon la revendication 5, dans laquelle les bandes de roulement de tracteur (28) sont étendues ou rétractées latéralement par rapport à l'axe longitudinal de plate-forme de mobilité.

7. Plate-forme de mobilité (10) selon la revendication 5, dans laquelle le module de capteur (12) inclut un capteur (76) émettant un signal de détection dans une direction vers l'avant à un angle aigu par rapport à l'axe longitudinal de plate-forme de mobilité pour détecter la caractéristique.

8. Plate-forme de mobilité (10) selon la revendication 1, dans laquelle le module informatique (16) commande le module d'entraînement (14) en utilisant des signaux sans fil.

9. Système, comprenant :
un appareil de commande (94) présentant un dispositif de commande (102) permettant à un utilisateur d'entrer une instruction ; et
la plate-forme de mobilité (10) selon l'une quelconque des revendications précédentes,
dans lequel le module de calcul (16) est en outre configuré pour :
recevoir l'instruction, et
en réponse à l'instruction reçue, commander le module d'entraînement (14) pour entraîner les bandes de roulement de tracteur (28) afin de déplacer la plate-forme de mobilité (10) vers et dans la partie à venir de l'environnement de fond de trou.

10. Système selon la revendication 9, dans lequel le module de capteur (12) inclut une caméra (80) pour capturer une image de l'environnement de fond de trou,
dans lequel le module de calcul (16) est en outre configuré pour transmettre l'image à l'appareil de commande (94), et
dans lequel l'appareil de commande (94) inclut un dispositif d'affichage (96) et affiche l'image sur le dispositif d'affichage (96).

11. Système selon la revendication 10, dans lequel l'image affichée peut être transportée vers l'utilisateur et dans lequel le dispositif de commande (102) est en outre configuré pour attendre une seconde instruction pour savoir s'il faut déplacer ou non la plate-forme de mobilité (10) dans la partie à venir de l'environnement de fond de trou.

12. Procédé (200), incluant les étapes consistant à :
interconnecter une pluralité de modules (12, 14, 16) pour former une plate-forme de mobilité (10), la pluralité de modules (12, 14, 16) comprenant un module de capteur (12), un module d'entraînement (14) et un module de calcul (16) disposés le long d'un axe longitudinal de plate-forme de mobilité, le module de capteur (12) étant disposé au niveau d'une extrémité distale de la plate-forme de mobilité (10) et configuré pour détecter une caractéristique de l'environnement de fond de trou, le module d'entraînement (14) étant disposé adjacent au module de capteur (12) et présentant des bandes de roulement de tracteur (28) et un système de précharge configuré pour appliquer une précharge des bandes de roulement de tracteur (28) contre une paroi de l'environnement de fond de trou, et le module de calcul (16) étant disposé adjacent au module d'entraînement (14) et configuré pour déterminer une première largeur d'une partie à venir de l'environnement de fond de trou à partir de la caractéristique et commander le module d'entraînement (14) pour entraîner les bandes de roulement de tracteur (28) afin de déplacer la plate-forme de mobilité (10) dans la partie à venir de l'environnement de fond de trou,
fournir au module d'entraînement (14) un boîtier d'entraînement (32) avec les bandes de roulement de tracteur (28) extensibles à partir du boîtier d'entraînement (32) et rétractables dans le boîtier d'entraînement (32) ;
commander, en utilisant le module de calcul (16), le module d'entraînement (14) pour étendre les bandes de roulement de tracteur (28) depuis le boîtier d'entraînement (32) ou rétracter les bandes de roulement de tracteur (28) dans le boîtier d'entraînement (32), pour avoir une seconde largeur inférieure à une première largeur afin d'adapter la plate-forme de mobilité (10) dans la partie à venir ; et
déplacer (250) les bandes de roulement de tracteur (28) depuis le boîtier d'entraînement (32) ou dans le boîtier d'entraînement (32) pour adapter la plate-forme de mobilité (10) dans la partie à venir ;
dans lequel le système de précharge comprend :
un moteur de vis-mère est configuré pour faire tourner une vis-mère (66) ;
un écrou de vis-mère (62) vissé sur la vis-mère (66), dans lequel le moteur de vis-mère peut fonctionner pour déplacer l'écrou de vis-mère (62) vers l'avant ou vers l'arrière à l'intérieur du boîtier d'entraînement (32) ;
des bras (54, 56) extensibles à partir du boîtier d'entraînement (14) et rétractables dans le boîtier d'entraînement (14) en ajustant une position de l'écrou de vis-mère (62) à l'intérieur du boîtier d'entraînement (32), dans lequel un ressort de précharge (60) est disposé entre l'écrou de vis-mère (62) et une base de chaque bras (54, 56) ; et
une cellule de charge configurée pour mesurer une force de précharge qui correspond à une compression du ressort de précharge (60),
dans lequel le procédé comprend en outre une commande, en utilisant le système de calcul (16), du module d'entraînement pour maintenir une force de précharge constante.

13. Procédé (200) selon la revendication 12, dans lequel le déplacement (250) de la bande de roulement de tracteur (28) comprend soit une extension (250) de la bande de roulement de tracteur (28) à partir du boîtier d'entraînement (32) soit un retrait de la bande de roulement du tracteur (28) dans le boîtier d'entraînement (32) avant de faire avancer la plate-forme de mobilité (10) dans la partie à venir de l'environnement de fond de trou.
